Europäisches Patentamt

European Patent Office

Office européen des brevets

(11) Veröffentlichungsnummer: **0 197 410 B1**

(12) **EUROPÄISCHE PATENTSCHRIFT**

(45) Veröffentlichungstag der Patentschrift: **11.03.92**

(21) Anmeldenummer: **86103999.8**

(22) Anmeldetag: **24.03.86**

(51) Int. Cl.⁵: **C21D 9/00,** F27D 3/00, F27D 3/04, F27B 9/38, F27B 9/14, H05B 6/02

(54) **Anordnung zum induktiven Erwärmen von metallischem Stranggut.**

(30) Priorität: **03.04.85 DE 3512285**

(43) Veröffentlichungstag der Anmeldung:
**15.10.86 Patentblatt 86/42**

(45) Bekanntmachung des Hinweises auf die
Patenterteilung:
**11.03.92 Patentblatt 92/11**

(84) Benannte Vertragsstaaten:
**AT BE CH DE FR GB IT LI SE**

(56) Entgegenhaltungen:
**DE-A- 2 163 858**
**DE-B- 1 195 787**
**US-A- 2 591 259**

(73) Patentinhaber: **SIEMENS AKTIENGESELL-SCHAFT**
**Wittelsbacherplatz 2**
**W-8000 München 2(DE)**

(72) Erfinder: **Richter, Eugen**
**Thomas-Mann-Strasse 1**
**W-8520 Erlangen(DE)**
Erfinder: **Oueitsch, Josef**
**Karl-Kaspar-Strasse 28**
**W-8500 Nürnberg(DE)**
Erfinder: **Preiner, Albert**
**Kirchdorf 102**
**A-8132 Pernegg(AT)**

## Beschreibung

Die Erfindung betrifft eine Anordnung zum induktiven Erwärmen von metallischem Stranggut gemäß der bekannten Merkmale des Patentanspruchs 1.

Einrichtungen dieser Art dienen dazu, Werkstück-Rohlinge vor ihrer Bearbeitung (walzen, schmieden) auf die für den folgenden Bearbeitungsvorgang notwendige Temperatur zu erwärmen. Eine gasbefeuerte Anordnung dieser Art ist aus der US-A-2 591 259 bekannt, bei der die Werkstücke an der Bodenseite mittels einer Hubvorrichtung in einen geschlossenen Heizraum überführt werden, dort von einer Haltevorrichtung bis zur Zufuhr einer weiteren Stange gehalten und somit schrittweise durch den gesamten, von Brennern erwärmten Heizraum von unten nach oben transportiert werden. Am oberen Ende wird der Heizraum verlassen und die Stange durch eine geeignete Ausstoßvorrichtung zur Weiterverarbeitung abtransportiert. Der Transport wird im Arbeitstakt durchgeführt. Aus der DE-B-11 95 787 ist es weiterhin bekannt, abgelängte Werkstücke (Blöckchen), in prinzipiell gleicher Weise durch eine Induktionsspule zu erwärmen. Die Form der Induktionsspule ist rund um Eckenüberhitzungen zu vermeiden.

Aus der EP-A-0 130 695 ist darüber hinaus eine Einrichtung zum Spannungsfreiglühen von Werkstücken bekannt, die ebenfalls nach dem vorgenannten Prinzip arbeitet und bei der die Induktionsspule in einen Primär- und einen Sekundärteil aufgeteilt ist, die übereinander angeordnet sind. Hierdurch wird die Ausbildung einer Aufheiz- und einer Temperaturhaltezone erreicht.

Aus der DE-B-1 182 373 ist fernerhin eine Induktions-Erwärmungsvorrichtung bekannt, bei der die Anpassung der Abmessungen des Heizreums an die Größe der zu erwärmenden Werkstücke in gewissen Grenzen durch Verschiebung einer Windungsseite der einwindigen Induktionsspule gegenüber dem restlichen Teil der Spule erreicht wird. Die Ausbildung der einzelnen Induktionsspulenteile ist blockartig.

Der Erfindung liegt die Aufgabe zugrunde, eine Induktionserwärmungsanordnung für Stangenmaterial so zu gestalten, daß diese in der Lage ist, Stangenmaterial, dessen Längsausdehnung etwa derjenigen des Heizraumes entspricht, unter Einhaltung des von der Weiterverarbeitungsanlage geforderten Arbeitstaktes wirtschaftlich und gleichmäßig (optimiert) zu erwärmen.

Die Aufgabe wird durch die im Patentanspruch 1 angegebene Kombination gelöst. Dadurch ist erreicht, daß trotz einer für eine gleichmäßige Erwärmung notwendigen Verweildauer des Materials im Heizraum der, von der Weiterverarbeitungsanlage geforderte, Arbeitstakt bei wirtschaftlicher Arbeitsweise, d.h. geringem Energieverbrauch, eingehalten werden kann.

Vorteilhafte Weiterbildungen der Erfindung sind den Unteransprüchen zu entnehmen.

Durch die in den Patentansprüchen 2 und 3 angegebenen Merkmale wird die Möglichkeit, eine der beiden Längsseiten der Induktionsspule gegenüber der anderen parallel zu verschieben und damit den Heizraum an die Abmessungen des durchlaufenden Materials im Sinne der Maximierung des Wirkungsgrades anzupassen, besonders gut verwirklicht. Die prinzipielle Maßnahme ist aus der DE-A-27 01 795 im Prinzip bekannt, dabei handelt es sich aber um eine andersartig aufgebaute Induktionsspule.

Durch das im Patentanspruch 4 angegebene Merkmal ist eine weitere wesentliche Verbesserung des Wirkungsgrades dadurch erreicht, daß der Induktionsofen zuführungsseitig mit einer Stangen-Richtstation verbunden ist. Durch das Ausrichten der Stangen in dieser Richtstation kann der Heizraum den eigentlichen Stangenabmessungen noch besser angepaßt werden, so daß der Wirkungsgrad des Ofens nicht mehr von der Maßhaltigkeit des zugeführten Materials abhängt.

Durch das im Patentanspruch 5 vorgeschlagene Ausrichten in zwei um 90° gegeneinander versetzte Ebenen kann darüber hinaus die Kapazität des Ofens maximal genutzt werden.

Ein Ausführungsbeispiel der Erfindung wird nachstehend anhand von Zeichnungen näher erläutert. Es zeigen:

Fig. 1     eine Seitenansicht der Anordnung in einer schematischen Querschnittsdarstellung,

Fig. 2     einen Längsschnitt durch den Induktionsofen,

Fig. 3     einen Ausschnitt der Induktionsspule,

Fig. 4     eine Prinzipdarstellung der Richtstation und

Fig. 5     ein elektrisches Prinzipschaltbild der Induktionsspule.

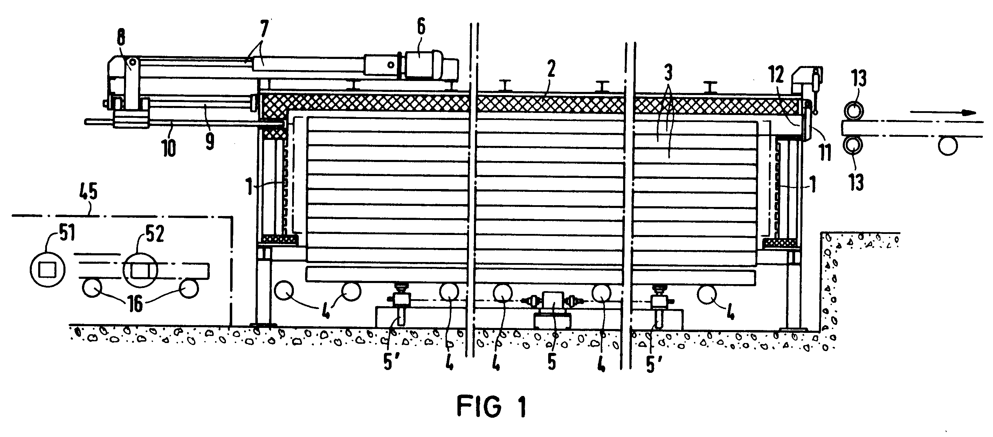

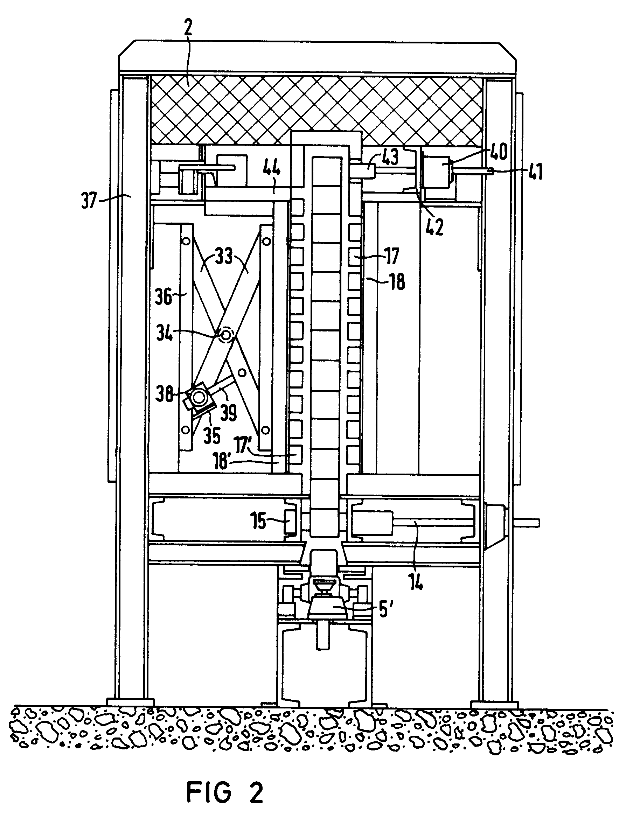

Bei dem in Fig. 1 dargestellten Induktionsofen ist dessen einlagige Induktionsspule 1 von einem hitzebeständigen Mantel 2 umgeben. In dem von der Induktionsspule umschlossenen Heizraum befindet sich das zu erwärmende Stangenmaterial mit einem die Ofenhöhe ausfüllenden Stapel übereinander angeordneter Stangen 3 mit rechteckigem Querschnitt. Dabei ist die zweite Stange von unten mittels noch zu beschreibender Klemmvorrichtungen am Ofengerüst fixiert. Die untere Stange ist frei beweglich auf Rollen 4 gelagert. Zwischen diesen Rollen befinden sich von einer gemeinsamen Antriebsvorrichtung 5 betätigte Hubvorrichtungen 5', welche in der Lage sinde, das gesamte Stangenpaket um die Höhe jeweils einer Stange nach oben zu verschieben. Die in der Ausstoßposition (Fig. 2) befindliche Stange wird von einer sogenannten Stoßmaschine mit einem vom Antriebsmotor 6 betätigten Schneckengetriebe 7, einem Hebel 8, der auf einer Gleitstange 9 horizontal verschiebbar gelagert ist und einer mit diesem fest verbundenen Schubstange 10 in der Weise ausgestoßen, daß die Schubstange 10 durch eine entsprechende Bohrung des Ofenmantels so in den Ofen hineinwirkt, daß sie bei entsprechender Betätigung der Stoßmaschine die oberste Stange durch eine Entladeöffnung 12, die mit Hilfe einer hydraulisch oder pneumatisch betätigten Klappe 11 während des Ausstoßvorganges freigegeben wird, in Richtung auf die Treibrollen 13 soweit nach außen bewegt, daß diese mit den Treibrollen in Eingriff kommt und dabei vollständig aus dem Ofen herausgezogen wird.

In Fig. 2 ist zu erkennen, daß die bereits erwähnten, mehrfach vorhandenen und über die Ofenlänge verteilt angeordneten lösbaren Klemmvorrichtungen 14 die zweite Stange von unten derart gegen eine am Ofengerüst angeordnete Halterung 15 drücken, daß diese den gesamten darüberliegenden Stapel hält. Zum Nachladen des Ofens wird die Klemmvorrichtung durch nicht dargestellte Mittel gelöst. Gleichzeitig drücken die Hubvorrichtungen 5' die auf den Rollen 4 liegende unterste Stange nach oben, so daß der gesamte Stapel um eine Stangenhöhe nach oben versetzt wird. Anschließend wird die Klemmvorrichtung 14 wieder betätigt, so daß die bisher unterste, in die vorletzte Position gelangte Stange dort fixiert wird und eine weitere, in der Vorbereitungsposition auf den Rollen 16 liegende Stange auf die Rollen 4 geschoben werden kann. Dieser zuletzt beschriebene Vorgang wiederholt sich schrittweise, so daß die Stangen von der untersten Position bis zur obersten durch das Induktionsfeld wandern.

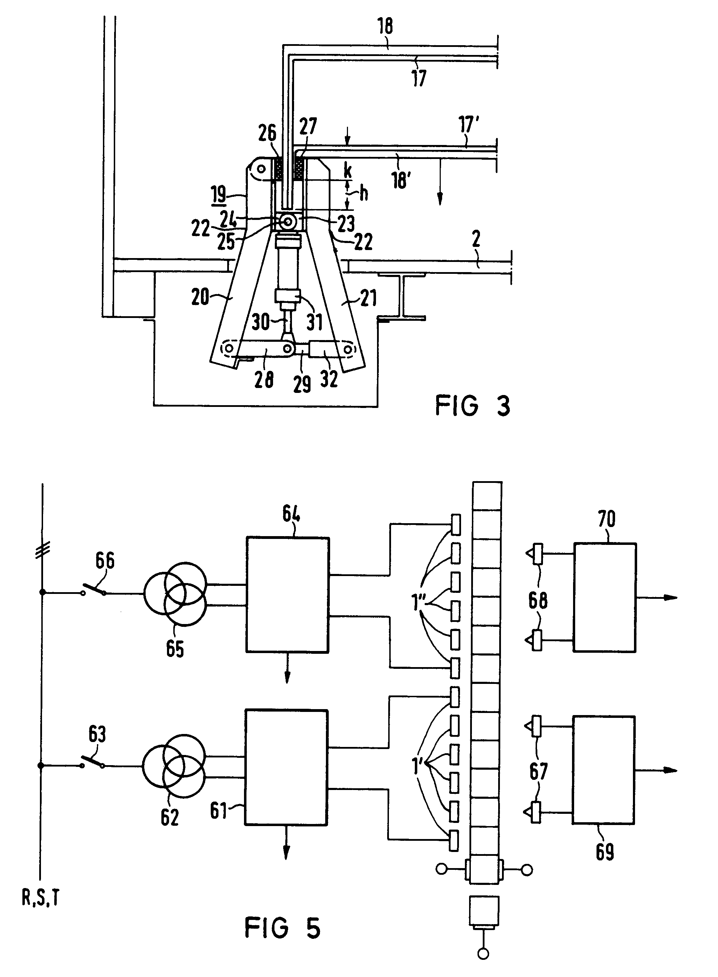

Ein solcher Ofen ist bei größeren Serien von Stangen gleicher Abmessungen rationell einsetzbar. Bei häufig wechselnden Stangenprofilen müssen entweder mehrere entsprechend angepaßte Öfen vorhanden sein oder die Umrüstzeiten nehmen einen erheblichen Umfang an. Dies geht in beiden Fällen auf Kosten der Wirtschaftlichkeit. Zur Verbesserung dieser Situation sind die einzelnen Windungen der Induktionsspule 1 nicht starr ausgeführt. Vielmehr sind die beiden Kanten wenigstens einer Spulenseite dadurch unterbrochen, daß jede einzelne Windung 17 und der sie tragende Spulenkörper (Tragkörperteil 18) aufgetrennt und die Windungsenden nach Art von Schaltkontakten miteinander verklemmbar sind. Dabei ist die den betreffenden Windungsteil tragende Wand des Spulenkörpers gegenüber dem restlichem Teil horizontal verschiebbar gestaltet. In den Figuren 2 und 3 ist eine mögliche konstruktive Lösung für diese Parallelverschiebung eines Tragkörpers der Spule dargestellt.

Fig. 3 zeigt einen Ausschnitt einer einzelnen Windung in einer Draufsicht an einer der unterbrochenen und zu kontaktierenden Kanten der Induktionsspule. Dabei ist das verlängerte Ende des dargestellten Windungsteils 17' um den verschiebbaren wandförmigen Tragkörperteil 18' herum um 90° nach außen gekröpft. Der übrige feststehende Tragkörperteil 18 sowie der zugeordnete überstehenden Teil der Windung 17 sind an den getrennten Ecken nach außen überstehend parallel zu dem abgekröpften Teil des Windungsteils 17' um den Betrag k + h nach außen weitergeführt, so daß der Windungsteil 17 durch eine noch zu beschreibende Klemmvorrichtung mit dem abgekröpften Ende des Windungsteiles 17' elektrisch leitend verklemmbar ist. Darin bedeuten k = Länge der elektrischen Kontaktfläche und h = gewünschter Hub des frei beweglichen Windungsteiles 17' und seines Tragkörpers 18' gegenüber den restlichen Teilen 17, 18. Die Klemmvorrichtung 19 besteht aus zwei im oberen Drittel nach außen abgekröpften Klemmhebeln 20, 21, die etwa im Bereich der Kröpfung 22 mit zwei nach innen ragenden, in einem gemeinsamen Drehpunkt 25 drehbar gelagerten Laschen 23, 24 versehen sind. Am Ende der kürzeren, parallelgeführten Arme der Klemmhebel sind Klemmbacken 26, 27 angeordnet, deren Innenseiten mit Isoliermaterial beschichtet sind. Dabei ist eine dieser Klemmbacken, beispielsweise 26, drehbar und die andere fest mit dem zugeordneten Klemmhebel und dieser wiederum mit dem verschiebbaren Tragkörper 18' verbunden. Die längeren, nach außen abgekröpften Arme der Hebel 20, 21 sind an ihren Enden mit je einem Spreizhebel 28, 29 schwenkbar verbunden. Die einander zugewandten Enden dieser Spreizhebel sind ihrerseits drehbar miteinander und mit der Druckstange 30 eines nicht dargestellten Kolbens einer pneumatischen, hydraulischen oder elektromechanischen Druckvorrichtung verbunden, deren Zylinder oder Spindel 31 im Drehpunkt 25 der Klemmhebel 20, 21 gelagert ist. Der Spreizhebel 29 ist zur Erreichung eines konstanten Klemmdruckes als Federteleskop 32 ausgebildet, wirkt also unter dem Druck einer gespannten Feder auf den Klemmhebel 21.

In der vereinfachten Querschnittsdarstellung gemäß Fig. 2 ist zu erkennen, daß der Verschiebeantrieb für die Parallelverschiebung der beweglichen Induktor-Längsseite mit ihrem Tragkörperteil 18' und dem Spulenteil 17' gegenüber dem feststehenden Teil mit dem Tragkörperteil 18 und dem Spulenteil 17 aus einer Scherenarmmechanik mit zwei Scherenarmen 33 besteht, die im Kreuzungspunkt 34 und an ihren Enden einerseits mit dem Tragkörper 18' und andererseits über eine Halterung 36 mit dem Grundgestell 37 des Ofens schwenkbar verbunden sind. Die Verschiebung des Tragkörpers 18' wird durch eine auf die Schenkel der Scherenarme 33 wirkende Scheren-Antriebsvorrichtung 35 mit einem Antriebsteil 38 und einer von diesem angetriebenen Spindel 39 bewirkt. Die Steuerung des Antriebsteiles 38 in Verbindung mit der Druckvorrichtung der Klemmvorrichtung 19 kann dabei entweder von Hand oder auch automatisch über eine Steuerzentrale in Anpassung an die jeweilige Knüppelbreite erfolgen.

Das Querstoßen der jeweils obersten Stange entsprechend dem vom Weiterverarbeitungsprozeß abhängigen Arbeitstakt erfolgt mit Hilfe von Querschubeinrichtungen 40, 41. Dabei ist der Antriebsteil 40 über ein Halterungsmittel 42 fest mit dem Grundgestell 37 verbunden. Das Antriebsmittel betätigt die Schubstange 41, die mit ihrem Stempel 43 durch eine entsprechende Öffnung in den Heizraum stößt und die jeweils oberste Stange quer auf eine Plattform 44 schiebt. Auf dieser Plattform verweilt die Stange bis zum nächsten Arbeitstakt. Diese Verweilzeit dient dem Temperaturausgleich. Zu diesem Zweck kann die Plattform auch zusätzlich beheizt werden. Mit Beginn des folgenden Arbeitstaktes wird die Stange von der Gleitstange 9 (Fig. 1) erfaßt und durch die geöffnete Klappe 11 nach außen zwischen die Treibrollen 13 geschoben. Nachdem sich die Schubstange 41 wieder in ihrer Ausgangsposition befindet, kann mit Hilfe der Hubvorrichtung 5, 5' im Zusammenspiel mit der Klemmvorrichtung 14 eine weitere Stange von unten nachgeschoben werden. Nachdem so die unterste Position freigeworden ist, kann über die Rollen 16 erneut eine inzwischen von der Stangen-Richtstation 45 gerichtete Stange den Rollen 4 zugeleitet werden.

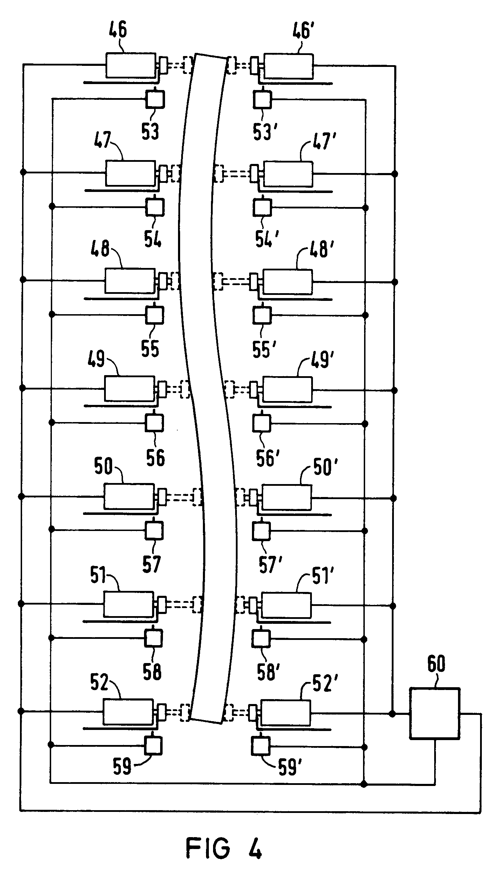

Die in Fig. 1 nur schematisch angedeutete Stangen-Richtstation 45 ist in Fig. 4 näher dargestellt. Sie besteht aus einer Anzahl in Stangenlängsrichtung versetzt angeordneter paarweise gegenüberliegender Zylinder 46 bis 52 bzw. 46' bis 52'. Jedem dieser Zylinder ist ein Wegmeßsystem 53 bis 59 bzw. 53' bis 59' zugeordnet. Die Wegmeßsysteme sind an einen Rechner 60 angeschlossen. Nach dem Einführen einer neuen Stange mit nicht dargestellten Transportmitteln wird diese zunächst vermessen, indem sich die Zylinder ebenfalls vom Rechner zentralgesteuert an die Außenwand der Stangen anlegen.Daraufhin liefern die Meßsysteme 53, 53' bis 59, 59' Meßwerte an den Rechner, aus denen sich der Grad der Verbiegung bestimmen läßt. Nachdem im Rechner die Materialkonstanten der jeweils zu richtenden Stange eingespeichert sind, ermittelt dieser für jedes Zylinderpaar Weggrößen, die so bemessen sind, daß unter Berücksichtigung der Elastizitätsgrenze des Materials, d.h. durch Überdrücken über die Mittelachse hinaus die Stange nach ihrem Zurückfedern in die gerichtete Position gelangt. Nach dem Ausrichten in eine Richtung kann die Stange mit nicht dargestellten Mitteln um 90° gedreht und dann in dieser Lage in der beschriebenen Weise ebenfalls gerichtet werden.

Die so ausgerichtete Stange wird dann wiederum über die Rollen 16 nach Bedarf in die Ausgangsposition zum Einführen in den Heizraum gebracht.

Insbesondere bei einem unregelmäßigen Arbeitstakt der Weiterverarbeitungsanlage besteht die Gefahr, daß die Stangen entweder zu stark oder nicht ausreichend erhitzt werden. Um dies zu vermeiden, kann der Heizraum in Temperaturzonen unterteilt werden, deren Höhe von einer entsprechenden Anzahl von Windungen der Induktionsspule gebildet ist. Zu diesem Zweck werden gemäß Fig. 5 die insgesamt vorhanden Windungen zu Gruppen zusammengefaßt und über je einen eigenen Energieerzeuger gespeist. Auf diese Weise sind im Beispiel der Fig. 5 zwei Temperaturzonen, nämlich eine untere und eine obere gebildet worden. Die untere Temperaturzone faßt die insgesamt vorhandenen Windungen zu einer Gruppe 1' zusammen, die von einem eigenen Energieerzeuger in Form eines Mittelfrequenz-Umrichters 61 gespeist sind, der über einen Drehstromtransformator 62 und einen Schalter 63 an das Netz RST angeschlossen ist. Die obere Temperaturzone wird von der Windungsgruppe 1" gebildet, die von einem Mittelfrequenz-Umrichter 64 gespeist ist, der über einen Drehstromtransformator 65 und den Schalter 66 ebenfalls an das Netz RST angeschlossen ist. Die in den beiden Temperaturzonen auftretenden Temperaturen werden von Pyrometern 67 für die untere Temperaturzone und 68 für die obere Temperaturzone ermittelt. Diese Pyrometer sind mit je einem Temperaturregler 69, 70 verbunden, welche die Leistung des ihnen zugeordneten Mittelfrequenz-Umrichters im Sinne der gewünschten Temperatur in der betreffenden Zone regeln.

**Patentansprüche**

1. Anordnung zum induktiven Erwärmen von metallischem Stranggut, bestehend aus einem Induktionsofen mit einer das Stranggut rechteckig umgebenden, auf einem Tragkörper befestigten einlagigen Induktionsspule mit einer Anzahl von Windungen, die Wände eines geschlossenen Heizraumes mit einem Deckel und einer Bodengruppe bildet, wobei der Heizraum durch Parallelverschieben einer Seitenwand an den Durchmesser bzw. die Breite des aus stangenförmigen Teilen bestehenden Materials anpaßbar ist, sowie Zu- und Abtransporteinrichtungen, wobei die Bodengruppe (4,5,5'; 14,14') eine Hubvorrichtung (5,5') und eine Haltevorrichtung (14,14') aufweist und wobei bei betrieb der Anordnung die Hubvorrichtung (5,5') arbeitstaktabhängig die jeweils zugeführte Stange in den Heizraum hineinhebt, wo sie von der Haltevorrichtung (14,14') taktweise gehalten wird, bis eine, von einer Beschickungsvorrichtung (16,45) zugeführte Stange ihre Position einnimmt und wobei der Deckel mit einer Ausstoßvorrichtung (6,7,8,9,10 und 40,41, 42,43,44) versehen ist, welche die Stange nach Durchlauf durch den Heizraum in der Ausstoßposition über Verschluß- und Transportvorrichtungen (11,12,13) taktweise abführt und wobei der Heizraum insbesondere in Temperaturzonen unterteilt ist, die eine von der Größe der betreffenden Temperaturzone abhängige Anzahl von Windungen (1',1'') aufweisen, denen je ein eigener Energieerzeuger (61,62 bzw.64,65) mit je einem thermostatischen Temperaturregler (67,69 bzw.68,70) zugeordnet ist und wobei schließlich jede einzelne Windung der Induktionsspule (1) und deren Tragkörper (18) in wenigstens zwei benachbarten Kanten unterbrochen sind und die gebildete freie Spulenseite (17') zusammen mit der ihr zugeordneten Wand (18') des Tragkörpers (18) gegenüber dem restlichen Teil der Spule (1) und der diesen tragenden Wänden (18) des Tragkörpers um einen wählbaren Hub (h) horizontal verschiebbar ist und die unterbrochenen Enden jeder Windung über elektrisch leitende, den Hub mechanisch ausgleichende, lösbare Verbindungsglieder miteinander verbunden sind.

2. Anordnung nach Anspruch 1, **dadurch gekennzeichnet,** daß die unterbrochenen Enden jeder Windung als Verbindungsglieder dienen, die so ausgebildet sind, daß sie als paarweise parallel angeordnete Anschlußlaschen mit einer den Hub ausgleichenden Länge als Schaltkontakte Teile von Schaltvorrichtungen sind, die aus mit der verschiebbaren Wand fest verbundenen Klemmvorrichtungen (19) bestehen, deren von einer Druckvorrichtung (30, 31) betätigte Klemmbacken (26, 27) die Anschlußlaschen während der Betriebsdauer kontaktierend zusammendrücken und während der Dauer des Verschiebens freigeben.

3. Anordnung nach Anspruch 1 oder 2, **dadurch gekennzeichnet,** daß die der freien Spulenseite (17') zugeordnete Wand (18') des Tragkörpers (18) mit Parallelführungsmitteln (33) sowie mit einem steuerbaren Antriebsmittel (38, 39) zum Parallelverschieben versehen ist.

4. Anordnung nach einem der vorhergehenden Ansprüche, **dadurch gekennzeichnet,** daß die Einrichtung zum Zuführen der Stangen eine Richtstation (45) umfaßt, die über die Stangenlänge verteilt eine Anzahl einander paarweise gegenüberliegender Drückvorrichtungen (46 bis 52 und 46' bis 52') enthält, denen Abtastmittel (53 bis 59 und 53' bis 59') zum Erfassen der positionsbezogenen Verbiegung der zugeführten Stange zugeordnet sind, und die so ermittelten Werte einem Rechner (60) zugeführt sind, der aufgrund dieser Werte und der eingegebenen Materialabmessungen und -konstanten die Drückvorrichtungen im Sinne einer Ausrichtung der Stange betätigt.

5. Anordnung nach Anspruch 4, **dadurch gekennzeichnet,** daß die Richtstation (45) ein Wendewerkzeug besitzt, das nach erfolgter Ausrichtung in einer Ebene die jeweilige Stange in eine um 90° dazu versetzte zweite Ebene dreht, in der sich der Richtvorgang wiederholt.

**Claims**

1. Arrangement for induction-heating metallic elongated material, consisting of an induction furnace with a single-layer induction coil, which surrounds the elongated material in a rectangular fashion and which is secured to a supporting body, having a number of windings forming walls of a closed heating space with a cover and an underbody, with it being possible to adapt the heating space, by parallel displacement of a side wall, to the diameter or the width of the material consisting of rod-shaped portions, and also feed and discharge devices, with the underbody (4, 5, 5'; 14, 14') having a lifting apparatus (5, 5') and a holding apparatus (14, 14') and with the lifting apparatus (5, 5'), in the case of operation of the arrangement, lifting the respectively supplied rod, in a manner dependent upon the work cycle, into the heating space where it is held cycle-wise by the holding apparatus (14, 14') until a rod supplied by a loading apparatus (16, 45) occupies its position and with the cover being provided with an ejecting apparatus (6, 7, 8, 9, 10 and 40, 41, 42, 43, 44) which carries away the rod after passing through the heating space in the ejection position cycle-wise by way of closing and transporting apparatus (11, 12, 13) and with the heating space being subdivided in particular into temperature zones which have a number of windings (1', 1'') dependent upon the size of the relevant temperature zone, with which windings there is associated a respective specific energy generator (61, 62 or 64, 65 respectively) with a respective thermostatic temperature regulator (67, 69 or 68, 70 respectively), and with finally each individual winding of the induction coil (1) and its supporting body (18) being interrupted into at least two adjacent edges and the free coil side (17') formed being horizontally displaceable together with the wall (18') of the supporting body (18) associated therewith, in relation to the rest of the coil (1) and the walls (18) of the supporting body supporting the latter, by a selectable stroke (h), and the interrupted ends of each winding being connected with each other by way of electrically conducting separable connecting elements which mechanically compensate the stroke.

2. Arrangement according to claim 1, characterised in that the interrupted ends of each winding are used as connecting elements which are formed so that as terminal lugs arranged in parallel in pairs with a length, which compensates the stroke, as switching contacts they are parts of switching apparatus consisting of clamping apparatus (19) fixedly connected with the displaceable wall, the clamping jaws (26, 27) of which clamping apparatus, actuated by a pressure apparatus (30, 31), compress the terminal lugs during the period of operation in a contacting manner and release them during the period of displacement.

3. Arrangement according to claim 1 or 2, characterised in that the wall (18') of the supporting body (18) associated with the free coil side (17') is provided with parallel guiding means (33) and also with a controllable drive means (38, 39) for the purposes of parallel displacement.

4. Arrangement according to one of the preceding claims, characterised in that the device for supplying the rods comprises a directing station (45) which contains, distributed over the length of the rod, a number of pressing arrangements (46 to 52 and 46' to 52'), which lie opposite each other in pairs and with which there are associated scanning means (53 to 59 and 53' to 59') for the purpose of detecting the position-related bending of the supplied rod, and the values thus determined are supplied to a computer (60) which, on the basis of these values and the material dimensions and constants which have been input, actuates the pressing arrangements for the purpose of aligning the rod.

5. Arrangement according to claim 4, characterised in that the directing station (45) has a turning tool which, after alignment has been effected in one plane, rotates the respective rod into a second plane which is offset in relation thereto by 90° and in which the directing process is repeated.

**Revendications**

1. Installation de chauffage par induction d'un produit métallique oblong, constitué d'un four à induction comprenant une bobine d'induction à une seule couche, ayant un certain nombre de spires entourant rectangulairement le produit oblong et fixée sur une pièce de support en formant les parois d'une chambre de chauffage fermée ayant un couvercle et un groupe de fond, la chambre de chauffage pouvant être adaptée, par déplacement parallèle d'une paroi latérale, au diamètre et à la largeur du matériau constitué de pièces oblongues, ainsi que des dispositifs d'amenée et d'évacuation, le groupe de fond (4,5,5';14,14') comportant un dispositif de levage (5,5') et un dispositif de maintien (14,14') et lors du fonctionnement de l'installation, le dispositif de levage (5,5') soulevant en cadence, dans la chambre de chauffage, la barre amenée où elle est maintenue, en cadence, par le dispositif de maintien (14,14') jusqu'à ce qu'une barre amenée par un dispositif de chargement (16,45) prenne sa position et le couvercle étant muni d'un dispositif d'expulsion (6,7,8,9,10 et 40,41,42,43,44) qui envoie, en cadence, la barre, après passage dans la chambre de chauffage, dans la position d'expulsion par l'intermédiaire de dispositifs de fermeture et de transport (11,12,13), la chambre de chauffage étant subdivisée notamment en zones de température qui comportent un nombre de spires (1',1") qui dépend de la dimension de la zone de température concernée, spires auxquelles sont associés respectivement leur propre dispositif de production d'énergie (61,62 et 64,65) ayant chacun un régulateur de température (67,69 et 68,70) thermostatique et enfin, chaque spire individuelle de la bobine d'induction (1) et sa pièce de support (18) étant interrompues en au moins deux bords voisins et le côté libre de bobine (17') formé pouvant être déplacé, avec la paroi (18') de la pièce de support (18) qui lui est associée, par rapport à la partie restante de la bobine (1) et par rapport aux parois (18) de la pièce de support qui la porte, horizontalement d'une course (h) que l'on peut choisir et les extrémités interrompues de chaque enroulement étant reliées ensemble par des éléments de liaison conducteurs de l'électricité, compensant mécaniquement la course et amovibles.

2. Dispositif selon la revendication 1, caractérisé en ce que les extrémités interrompues de chaque spire servent d'éléments de liaison, qui sont constitués de façon à être, sous forme de languettes de connexion disposées parallèlement par paires et ayant une longueur compensant la course, en tant que contacts d'interrupteur, des parties de dispositifs de coupure du courant constituées de dispositifs de serrage (19) qui sont reliés rigidement à la paroi mobile et dont les mâchoires de serrage (26,27) actionnées par un dispositif de pression (30,31) pressent ensemble, de manière à assurer un contact, les languettes de connexion pendant la durée du fonctionnement et les libèrent pendant la durée du déplacement.

3. Dispositif suivant la revendication 1 ou 2, caractérisé en ce que la paroi (18') de la pièce de support (18), qui est associée au côté de bobine (17') libre, est munie de moyens de guidage parallèles (33), ainsi que d'un moyen d'entraînement (38,39) pouvant être commandé et destiné au déplacement parallèle.

4. Dispositif selon l'une des revendications précédentes, caractérisé en ce que le dispositif pour amener les barres comprend un poste d'alignement (45) qui comporte, répartis sur la longueur des barres, un certain nombre de dispositifs de poussée (46 à 52 et 46' à 52'), opposés les uns aux autres par paires et répartis sur la longueur de la barre, auxquels sont associés des moyens de détection (53 à 59 et 53' à 59') en vue de détecter la courbure en fonction de la position de la barre amenée et à envoyer les valeurs ainsi déterminées à un ordinateur (60) qui, sur la base de ces valeurs et des mesures et constantes du matériau introduites, actionne les dispositifs de poussée dans le sens d'un alignement de la barre.

5. Dispositif selon la revendication 4, caractérisé en ce que le poste d'alignement (45) possède un outil d'orientation qui, après avoir effectué l'alignement dans un plan, fait tourner la barre dans un deuxième plan à 90°, dans lequel se répète le processus d'alignement.

FIG 1

EP 0 197 410 B1

FIG 2

FIG 3

R,S,T

FIG 5

FIG 4